# EUROPEAN PATENT SPECIFICATION

(11) **EP 1 190 614 B1**
(45) Date of publication and mention of the grant of the patent: **26.09.2007**
(21) Application number: 01202648.0
(22) Date of filing: 10.07.2001
(51) Int. Cl.: A01B 79/00, A01B 63/114, A01B 63/32

(54) **An implement for treating a soil surface**
Bodenoberflächenbearbeitungsgerät
Outil pour le travail d'une surface de sol

(30) Priority: 25.07.2000 NL 1015800
(43) Date of publication of application: 27.03.2002
(73) Proprietor: Lely Enterprises AG, 6300 ZUG (CH)
(72) Inventor: Van der Lely, Alexander, 3065 NA Rotterdam (NL); Koorn, Maarten, 3123 CP Schiedam (NL); Geerts, Cornelius Franciscus Johannes, 4926 RJ Lage Zwaluwe (NL)
(74) Representative: Corten, Maurice Jean F.M.

(56) References cited:
- EP-A- 0 776 598
- WO-A-86/05353
- FR-A- 1 604 967
- US-A- 4 279 138
- US-A- 5 961 573

## Description

The invention relates to an implement, according to the preamble of claim 1, for treating a soil surface, such as for example raking together grass and/or hay, said implement being provided with a frame comprising at least one, preferably motor-drivable, treating unit provided with treating elements for treating the soil surface.

Such an implement is known (eg. see EP-A-776598)

It is an object of the invention to improve such an implement. In accordance with the invention this is achieved with the implement as claimed.

According to a particular embodiment, the sensors are disposed on the frame. In a preferred embodiment of the invention, the sensors are designed as ultrasonic sensors. According to again another inventive feature, the sensors may comprise a camera. However, it will be obvious that also many other sensors than the sensors mentioned above may be applied. According to again another embodiment, the adjusting means comprise control elements which are suitable for tilting the treating unit to the front respectively to the rear and/or laterally, seen in the direction of travel of the implement. According to another further inventive feature, for that purpose the adjusting means comprise at least one control element and preferably three control elements. Depending on the number of control elements the treating unit is capable of being tilted about one or more axes and thus being adjusted. According to another further inventive feature it is further possible to adjust the treating unit in height relative to the soil surface. In the situation that three control elements are applied, it is possible to adjust the treating unit omnidirectionally relative to the soil surface. In a preferred embodiment of the invention the control elements are designed as control cylinders or stepper motors. For the purpose of realizing the above-mentioned tilting movement in a simple manner, according to the invention the adjusting means comprise one or more ball joints. According to again another further aspect of the invention, the adjusting means comprise a clinometer which is suitable for determining the angle that is enclosed by the treating unit and the soil surface. According to again another further aspect of the invention, the adjusting means comprise height measuring means which are suitable for determining the height assumed by the treating unit relative to the soil surface. According to another further inventive feature, the treating unit is designed as a motor-drivable rake. According to a further inventive feature, the rake comprises tine arms which are pivoted through a curve path. According to another further inventive feature, the implement comprises a driving speed sensor. According to another further inventive feature, the implement comprises an rpm-sensor which is suitable for determining the number of revolutions of the treating unit and/or the treating element. With the aid of the driving speed sensor and the rpm-sensor it is possible, depending on the conditions of the surface to be treated, optimally to adjust the working depth of the treating unit and/or the treating element. With a rake or a tedder for example, at an unchanging number of revolutions of the treating unit and at an increased driving speed, it is possible to choose a deeper adjustment of the treating unit and/or the treating element.

The invention will now be explained in further detail with reference to the accompanying figures, in which
Figure 1 is a side view of a first embodiment of an implement according to the invention;
Figure 2 is a side view of a second embodiment of the implement according to the invention;
Figure 3 is a plan view of the implement in Figure 2 according to the arrow III in Figure 2;
Figure 4 is a side view of a third embodiment of the implement according to the invention, and
Figure 5 is a plan view of the implement in Figure 4 according to the arrow V in Figure 4.

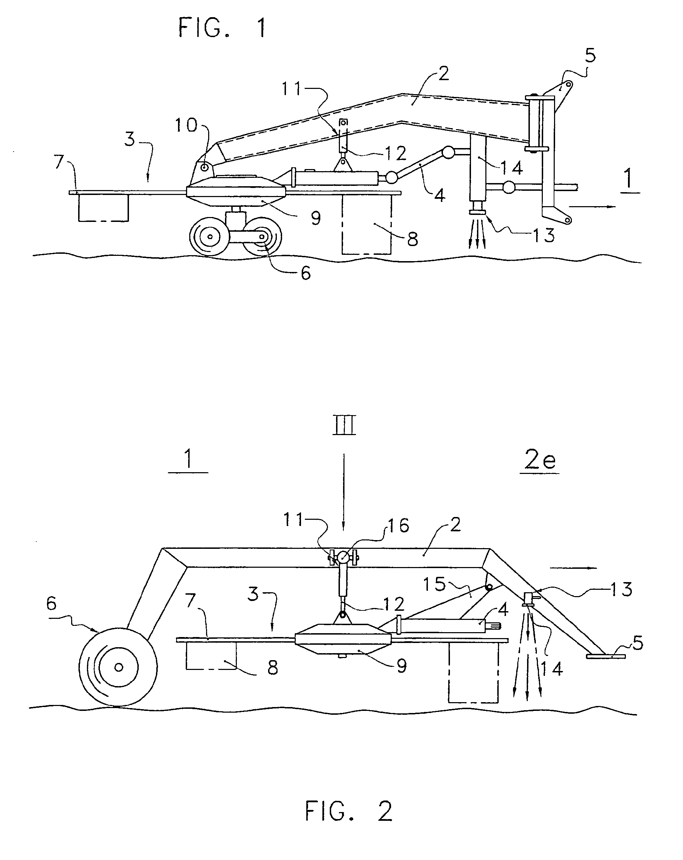

Figure 1 is a side view of a first embodiment of an implement 1 according to the invention, said implement being provided with a frame 2 comprising a treating unit 3 which is designed as a rake in the present embodiment. The rake 3 is motor-drivable via a transmission 4. The frame 2 is further provided with coupling means 5 with the aid of which the implement can be coupled to a vehicle, such as a tractor for example. In the present embodiment the rake 3 is supported by a wheel set 6 that is designed as a tandem wheel set. The rake 3 is further provided with tine arms 7 having at their ends rake tines 8. The tine arms 7 are controlled via a central box 9 with a curve path therein. The central box 9 is connected with the frame 2 via a horizontal hinge pin 10. Between the frame 2 and the transmission 4 there are further provided adjusting means 11 with the aid of which the treating unit 3 can be adjusted relative to the soil surface by pivoting about the horizontal hinge pin 10. In the present embodiment the adjusting means 11 comprise a control cylinder 12 which is preferably designed as a servo-pneumatic control cylinder. The implement 1 is further provided with measuring means 13 which are suitable for feeling and/or scanning the soil surface to be treated and determining ground irregularities, such as slopes and/or holes for example, that may be present therein. The measuring means 13 comprise a plurality of sensors 14 which are disposed near the front side of the frame 2 and which are capable of feeling and/or scanning the soil at least over the full working width of the implement 1. When there is measured by the measuring means 13 a difference in height in the soil, the rake tines 8 of the rake 3 are adjusted with the aid of the adjusting means 11 in such a manner that the distance from the rake tines to the soil is maintained. In this way the rake tines are prevented from moving through the soil or extending far above the soil, so that they cannot take along grass or hay.

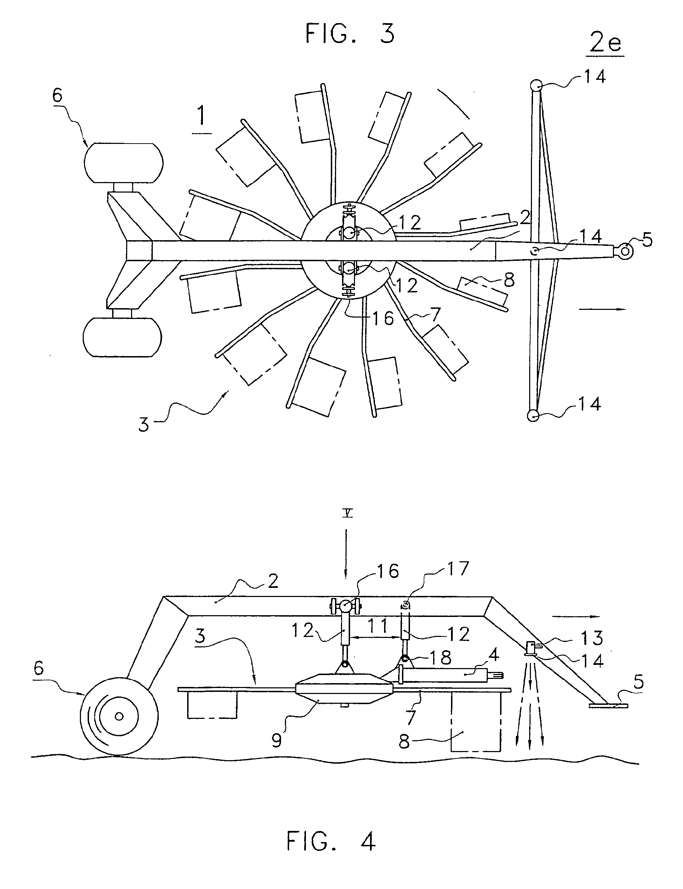

Figures 2 and 3 show a second embodiment of an implement according to the invention, in which parts corresponding to those in the first embodiment are indicated by the same reference numerals. In the second embodiment of the invention, unlike the first embodiment, not the treating unit 3, but the frame 2 is supported by a wheel set 6. In the present embodiment, seen in the direction of travel of the implement, the wheel set 6 is disposed after the treating unit 3. By means of a beam 15 the treating unit 3 is fitted to the frame 2 so as to be hingeable on a ball joint 16. Two control cylinders 12 are further provided between the central box 9 and the frame 2. The control cylinders 12 are also hingeably connected with the frame 2 by means of a ball joint 16. In the present embodiment the measuring means 13 comprise three sensors 14 with the aid of which ground irregularities, such as slopes and/or holes for example, can be determined. Due to the fact that the treating unit 3 is adjustable in height by means of the two control cylinders 12, the treating unit 3, seen in the direction of travel of the implement 1, can be tilted not only to the front and/or to the rear, but also laterally. In this manner it is possible to adjust even better the orientation and/or height of the rake tines 8 in relation to slopes (and/or holes) in the soil.

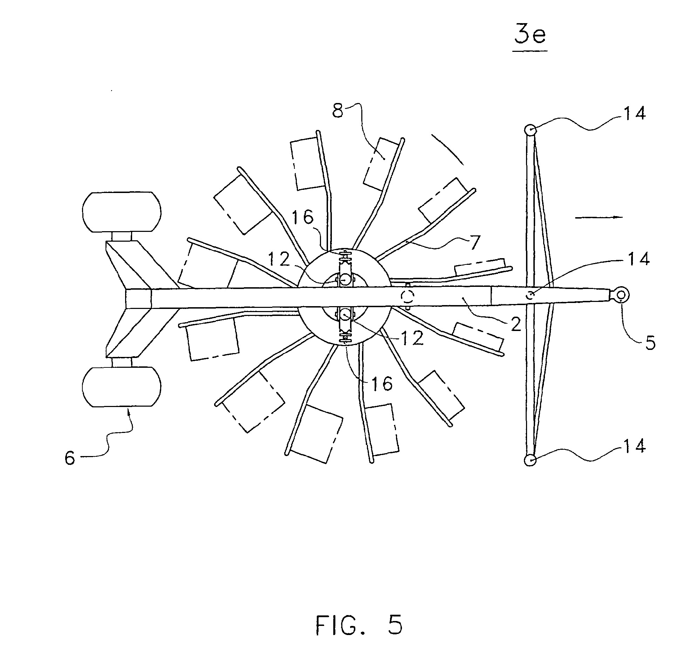

Figures 4 and 5 show a third embodiment of the implement according to the invention, in which parts corresponding to those in the first and second embodiment are indicated by the same reference numerals. The point in which the third embodiment differs most from the second embodiment is that the third suspension point of the treating unit 3 is not constituted by a beam 15, but by a control cylinder 12 which is connected with one end to the frame 2 by means of a horizontal hinge pin and which is connected with its other end to the transmission 4 by means of a horizontal hinge pin 18. Due to the fact that the treating unit 3 is connected with the frame 2 by means of three control cylinders 12 it is possible optimally to position the rake tines 8 of the treating unit 3 omnidirectionally relative to the frame 2, so that there can be achieved an excellent adjustment of the rake tines 8 to the soil in relation to slopes and/or holes therein.

## Claims

1. An implement for treating a soil surface, such as for example raking together grass and/or hay, said implement (1) being provided with a frame (2) comprising at least one, preferably motor-drivable, treating unit (3) provided with treating elements (8) for treating the soil surface, wherein the implement (1) is provided with a storage medium which is suitable for storing data regarding the soil surface, in particular the irregularities in the soil surface to be treated, as well as with means for determining the position, such as DGPS for example, for determining the current position of the treating unit (3), and with adjusting means (11) that are suitable for automatically adjusting the orientation and/or height of the treating unit (3) relative to the soil surface, on the basis of the current position of the treating unit (3) and the stored data regarding the soil surface at that place and wherein the implement (1) is provided with measuring means (13) which are suitable for feeling and/or scanning the soil surface to be treated and for determining ground irregularities, such as slopes and/or holes for example, that may be present therein **characterized in that** the measuring means (13) comprise one or more sensors (14) which, seen in the direction of travel of the implement (1), are capable of feeling and/or scanning the soil surface in front of the treating unit at least over the full working width of the implement.

2. An implement as claimed in claim 1, **characterized in that** the sensors (14) are disposed on the frame (2).

3. An implement as claimed in claim 2, **characterized in that** the sensors (14) are designed as ultrasonic sensors.

4. An implement as claimed in claim 2, **characterized in that** the sensors (14) comprise a camera.

5. An implement as claimed in any one of the preceding claims, **characterized in that** the adjusting means (11) comprise control elements (12) which are suitable for tilting the treating unit (3) to the front respectively to the rear and/or laterally, seen in the direction of travel of the implement.

6. An implement as claimed in claim 5, **characterized in that** the adjusting means (11) comprise at least one control element and preferably three control elements (12).

7. An implement as claimed in claim 5 or 6 **characterized in that** the control elements (12) are designed as control cylinders or stepper motors.

8. An implement as claimed in any one of the preceding claims, **characterized in that** the treating unit (3) is adjustable in height relative to the soil surface.

9. An implement as claimed in claim 8, **characterized in that** the treating unit (3) is omnidirectionally adjustable relative to the height.

10. An implement as claimed in any one of the preceding claims, **characterized in that** the adjusting means (11) comprise a ball joint (16).

11. An implement as claimed in any one of the preceding claims, **characterized in that** the adjusting means (11) comprise a clinometer which is suitable for determining the angle enclosed by the treating unit (3) and the soil surface.

12. An implement as claimed in any one of the preceding claims, **characterized in that** the adjusting means (11) comprise height measuring means which are suitable for determining the height assumed by the treating unit (3) relative to the soil surface.

13. An implement as claimed in any one of the preceding claims, **characterized in that** the treating unit (3) is designed as a motor-drivable rake (3).

14. An implement as claimed in claim 13, **characterized in that** the rake comprises tine arms (7) which are pivoted through a curve path.

15. An implement as claimed in any one of the preceding claims, **characterized in that** the implement comprises a driving speed sensor.

16. An implement as claimed in any one of the preceding claims, **characterized in that** the implement comprises an rpm-sensor which is suitable for determining the number of revolutions of the treating unit and/or the treating element.

## Patentansprüche

1. Vorrichtung zum Bearbeiten einer Bodenoberfläche, wie z. B. zum Zusammenrechen von Gras und/oder Heu, wobei die Vorrichtung (1) mit einem Rahmen (2) versehen ist, der mindestens eine vorzugsweise motorisch antreibbare Bearbeitungseinheit (3) umfasst, die mit Bearbeitungselementen (8) zum Bearbeiten der Bodenoberfläche versehen ist, wobei die Vorrichtung (1) versehen ist mit einem Speichermedium, das geeignet ist, Daten bezüglich der Bodenoberfläche, insbesondere der Unebenheiten in der zu bearbeitenden Bodenoberfläche, zu speichern, sowie mit einer Vorrichtung zum Ermitteln der Position, wie z. B. DGPS, um die gegenwärtige Position der Bearbeitungseinheit (3) zu ermitteln, und mit einer Stellvorrichtung (11), die geeignet ist, die Ausrichtung und/oder Höhe der Bearbeitungseinheit (3) relativ zu der Bodenoberfläche auf der Basis der gegenwärtigen Position der Bearbeitungseinheit (3) und der gespeicherten Daten bezüglich der Bodenoberfläche an dieser Stelle automatisch einzustellen, und wobei die Vorrichtung (1) mit einer Messvorrichtung (13) versehen ist, die geeignet ist, die zu bearbeitende Bodenoberfläche abzufühlen und/oder abzutasten und eventuell vorhandene Bodenunebenheiten, wie z. B. Böschungen und/oder Löcher, zu ermitteln,
**dadurch gekennzeichnet, dass** die Messvorrichtung (13) einen oder mehrere Sensoren (14) umfasst, die geeignet sind, in Fahrtrichtung der Vorrichtung (1) gesehen die Bodenoberfläche vor der Bearbeitungseinheit zumindest über die gesamte Arbeitsbreite der Vorrichtung abzufühlen und/oder abzutasten.

2. Vorrichtung nach Anspruch 1,
**dadurch gekennzeichnet, dass** die Sensoren (14) an dem Rahmen (2) angeordnet sind.

3. Vorrichtung nach Anspruch 2,
**dadurch gekennzeichnet, dass** die Sensoren (14) als Ultraschallsensoren ausgeführt sind.

4. Vorrichtung nach Anspruch 2,
**dadurch gekennzeichnet, dass** die Sensoren (14) eine Kamera umfassen.

5. Vorrichtung nach einem der vorhergehenden Ansprüche,
**dadurch gekennzeichnet, dass** die Stellvorrichtung (11) Steuerelemente (12) umfasst, die geeignet sind, die Bearbeitungseinheit (3) in Fahrtrichtung der Vorrichtung gesehen nach vorn bzw. nach hinten und/oder zur Seite zu neigen.

6. Vorrichtung nach Anspruch 5,
**dadurch gekennzeichnet, dass** die Stellvorrichtung (11) mindestens ein Steuerelement und vorzugsweise drei Steuerelemente (12) umfasst.

7. Vorrichtung nach Anspruch 5 oder 6,
**dadurch gekennzeichnet, dass** die Steuerelemente (12) als Steuerzylinder oder Schrittmotoren ausgeführt sind.

8. Vorrichtung nach einem der vorhergehenden Ansprüche,
**dadurch gekennzeichnet, dass** die Bearbeitungseinheit (3) relativ zu der Bodenoberfläche höhenverstellbar ist.

9. Vorrichtung nach Anspruch 8,
**dadurch gekennzeichnet, dass** die Bearbeitungseinheit (3) bezüglich der Höhe in allen Richtungen verstellbar ist.

10. Vorrichtung nach einem der vorhergehenden Ansprüche,
**dadurch gekennzeichnet, dass** die Stellvorrichtung (11) ein Kugelgelenk (16) umfasst.

11. Vorrichtung nach einem der vorhergehenden Ansprüche,
**dadurch gekennzeichnet, dass** die Stellvorrichtung (11) ein Klinometer umfasst, das geeignet ist, den von der Bearbeitungseinheit (3) mit der Bodenoberfläche gebildeten Winkel zu ermitteln.

12. Vorrichtung nach einem der vorhergehenden Ansprüche,
**dadurch gekennzeichnet, dass** die Stellvorrichtung (11) eine Höhenmessvorrichtung umfasst, die geeignet ist, die von der Bearbeitungseinheit (3) relativ zur Bodenoberfläche eingenommene Höhe zu ermitteln.

13. Vorrichtung nach einem der vorhergehenden Ansprüche,
**dadurch gekennzeichnet, dass** die Bearbeitungseinheit (3) als motorisch antreibbarer Rechen (3) ausgeführt ist.

14. Vorrichtung nach Anspruch 13,
**dadurch gekennzeichnet, dass** der Rechen Zinkenarme (7) umfasst, die über eine Kurvenbahn geschwenkt werden.

15. Vorrichtung nach einem der vorhergehenden Ansprüche,
**dadurch gekennzeichnet, dass** die Vorrichtung einen Fahrgeschwindigkeitssensor umfasst.

16. Vorrichtung nach einem der vorhergehenden Ansprüche,
**dadurch gekennzeichnet, dass** die Vorrichtung einen Drehzahlsensor umfasst, der geeignet ist, die Anzahl der Umdrehungen der Bearbeitungseinheit und/oder des Bearbeitungselements zu ermitteln.

## Revendications

1. Outil destiné à traiter une surface de sol, comme par exemple à ratisser ensemble l'herbe et/ou la paille, ledit outil (1) étant muni d'une structure (2) comprenant au moins une unité de traitement (3) actionnée de préférence par un moteur munie d'éléments de traitement (8) afin de traiter la surface de sol, dans lequel l'outil (1) est muni d'un support de données lequel permet le stockage des données concernant la surface de sol, en particulier les irrégularités dans la surface de sol devant être traitées, ainsi que de moyens permettant de déterminer la position, tel qu'un DGPS par exemple, afin de déterminer la position actuelle de l'unité de traitement (3), et de moyens d'ajustement (11) permettant d' ajuster de manière automatique l'orientation et/ou la hauteur de l'unité de traitement (3) par rapport à la surface de sol, sur la base de la position actuelle de l'unité de traitement (3) et aux données stockées concernant la surface de sol à cet emplacement, et dans lequel l'outil (1) est muni de moyens de mesure (13) lesquels permettent de percevoir et/ou balayer la surface de sol devant être traitée et à déterminer les irrégularités du sol, tels que les pentes et/ou les trous par exemple, qui peuvent être présentes à l'intérieur de celle-ci, **caractérisé en ce que** les moyens de mesure (13) comprennent un ou plusieurs capteurs (14) lesquels, vus dans le sens de déplacement de l'outil (1) peuvent percevoir et/ou balayer la surface de sol devant l'unité de traitement, au moins sur toute la largeur de travail de l'outil.

2. Outil selon la revendication 1, **caractérisé en ce que** les capteurs (14) sont disposés sur la structure (2).

3. Outil selon la revendication 2, **caractérisé en ce que** les capteurs (14) sont des capteurs à ultrasons.

4. Outil selon la revendication 2, **caractérisé en ce que** les capteurs (14) comprennent une caméra.

5. Outil selon l'une quelconque des revendications précédentes, **caractérisé en ce que** les moyens d'ajustement (11) comprennent des éléments de commande (12) lesquels permettent d'incliner l'unité de traitement (3) vers l'avant respectivement à l'arrière et/ou de manière latérale, vus dans le sens de déplacement de l'outil.

6. Outil selon la revendication 5, **caractérisé en ce que** les moyens d'ajustement (11) comprennent au moins un élément de commande et de préférence trois éléments de commande (12).

7. Outil selon la revendication 5 ou 6, **caractérisé en ce que** les éléments de commande (12) sont des cylindres de commande ou des moteurs pas-à-pas.

8. Outil selon l'une quelconque des revendications précédentes, **caractérisé en ce que** la hauteur de l'unité de traitement (3) peut être ajustée par rapport à la surface de sol.

9. Outil selon la revendication 8, **caractérisé en ce que** l'unité de traitement (3) peut être ajustée en hauteur de manière omnidirectionnelle.

10. Outil selon l'une quelconque des revendications précédentes, **caractérisé en ce que** les moyens d'ajustement (11) comprennent un joint à rotule (16).

11. Outil selon l'une quelconque des revendications précédentes, **caractérisé en ce que** les moyens d'ajustement (11) comprennent un clinomètre lequel permet de déterminer l'angle formé par l'unité de traitement (3) et la surface de sol.

12. Outil selon l'une quelconque des revendications précédentes, **caractérisé en ce que** les moyens d'ajustement (11) comprennent des moyens de mesure de la hauteur lesquels permettent de déterminer la hauteur supposée de l'unité de traitement (3) par rapport à la surface de sol.

13. Outil selon l'une quelconque des revendications précédentes, **caractérisé en ce que** l'unité de traitement (3) est un râteau actionné par un moteur (3).

14. Outil selon la revendication 13, **caractérisé en ce que** le râteau comprend des leviers de dents (7) lesquels sont pivotés à travers un chemin incurvé.

15. Outil selon l'une quelconque des revendications précédentes, **caractérisé en ce que** l'outil comprend un capteur de vitesse d'entrainement.

16. Outil selon l'une quelconque des revendications précédentes, **caractérisé en ce que** l'outil comprend un capteur de régime lequel sert à déterminer le nombre de tours de l'unité de traitement et/ou de l'élément de traitement.
